# EUROPEAN PATENT APPLICATION

(11) **EP 4 738 658 A1**
(43) Date of publication of application: **06.05.2026**
(21) Application number: 24210272.1
(22) Date of filing: 31.10.2024
(51) Int. Cl.: H02K 1/278, H02K 1/2791, H02K 3/02, H02K 3/47, H02K 7/18, H02K 16/02, H02K 21/22, H02K 21/14

(54) **LOW-RESISTANCE AND LOW-SPEED MOTOR-GENERATOR**

(71) Applicant: VP System Sp z o.o., 45-839 Opole (PL)
(72) Inventor: JUSZKO, Rafal, 50-241 Wroclaw (PL); ZEMLAK, Arkadiusz, 55-011 Siechnice (PL); ZAJDEL, Jakub, 01-793 Warszawa (PL)
(74) Representative: JWP Patent & Trademark Attorneys

(57) **Abstract**

The subject of the present invention is a low-resistance and low-speed motor-generator comprising a rotor comprising an outer magnetic ring (1) and an inner magnetic ring (2), and a stator comprising a serpentine coil (4), arranged between the outer magnetic ring (1) and the inner magnetic ring (2), wherein the at least one magnetic ring constitutes a multipole monolithic magnet. In a preferred variant of the present invention, the serpentine coil (4) comprises at least one layer of an electrical conductor and at least one layer of a material with good magnetic permeability which are arranged alternatingly, which can be referred to as an air serpentine coil with an "inner core".

## Description

The subject of the present invention is a low-resistance and low-speed motor-generator.

An example method for assembly of a brushless motor-generator is known from the document WO2018064370A1. The disclosed motor-generator comprises a rotor and a stator. The rotor is constructed of two concentric, spaced-apart steel rotor cylinders which are attached to a hub. The hub is supported by a central axle arranged in rotation-enabling bearings. Circumferential arrangements of permanent magnets with variable polarity are attached to the rotor cylinders. This document discloses the utilization of a so-called air core, where the windings are arranged in an air gap, without the employment of a ferromagnetic core. Such a construction reduces magnetic losses, such as hysteresis and eddy currents. In the disclosed process for assembly, a winding with the air core is formed by covering a non-magnetic mold of the winding with a tacky layer of an adhesive and then winding the windings onto a winding pattern onto the non-magnetic mold by employing a wire composed of multiple separately insulated strands of electrical conductors which are electrically connected in parallel.

The document WO16044408A1 discloses a motor with high efficiency which utilizes laminated sheet windings (LSW). The disclosed design is more compact, lighter and generates less heat than the traditional motors. The laminated sheets form stationary windings around which permanent magnets rotate, generating a magnetic field. The described design of the magnets relates to complex arrangements consisting of magnets with various shapes. The magnets may have a cuneal (trapezoidal or prismatic), rectangular, cylindrical or arcuate shape. According to the document, it is best to connect the magnets to each other by means of a non-conductive adhesive at their interfaces. The motor may be configured in a radial or axial arrangement. In this technology, large air gaps are used, which increases the performance.

The known low-resistance generators are characterized by a different structure from the classical motors and generators. The primary difference is the absence of an iron core in or around the space of the stator coils which interacts with the magnetic field induced by the rotor magnets. In effect, the motor and generator with the classical structure cause additional resistance originating from a steel core, the role of which is to close the magnetic field of the rotor behind the stator coils. Typically, the foregoing of the iron core enforces the employment of an additional row of magnets on the other side of the stator to create an appropriate magnetic circuit.

A method for making a stator coil is known from the document US4883981A which comprises the process of winding an electrical conductor (a copper wire) around pins disposed on a flat surface. Methods of making a serpentine coil are also known where initially turns of an electric conductor are wound into the shape of a circle unfolded on movable pins laid on a flat surface, which is then followed by having the pins alternatingly extend inwardly and outwardly of the resulting circle, which bends the coil into the shape of a flat, horizontal serpentine coil. In other known solutions, extendable rolls of a winding device are used instead of the movable pins.

A method for producing a bonded magnet is known from the international patent application WO2011126023A1 which allows to reduce the costs and improve the effectiveness of the production of an annular bonded magnet. In the described document, in-mold magnetization occurs, that is, a magnetic field is applied to a mixture of a magnetic powder and a resin in the course of molding in a mold. Magnetic particles are oriented during the molding. According to this document, a powder of rare earth metal magnets and a resin as a binding material are used for the production of the bonded magnets. This resin may be thermosetting or thermoplastic, depending on the molding process. In particular, resins such as epoxy, unsaturated polyester, phenolic, polyamide, polyamideimide, and other resins were mentioned. Materials such as resin, which undergoes softening or melting during heating, are employed in this process, which enables the magnetic orientation of the powders in the structure. The process does not require high temperatures typical for sintered magnets. It is advisable to use such magnets for a multipole motor, allowing for miniaturization and weight savings. However, the option of using such magnets in generators, especially low-resistance generators in which no amplification of the magnetic field takes place through the winding of the coil onto a core with high magnetic permeability, is not advised.

The bonded magnet described above constitutes an example of a multipole monolithic magnet. The multipole monolithic magnets are characterized by having multiple poles, connected in the production process such that they constitute a uniform, integral structure. This is an alternative approach to, e.g., multipole adhered magnets known from the prior art where magnets with different poles in an appropriately chosen shape are adhered to each other or affixed to a carrier, e.g. in the shape of a ring. Other examples of the multipole monolithic magnets may be multipole sintered magnets or so-called plastic-bonded magnets constituting composites formed through the combination of magnetic powders, such as ferrite or rare earth metals, with a plastic as a binder, which enables them to be formed into complex shapes while retaining the magnetic properties.

The solutions known from the prior art did not allow for the production of a low-resistance and low-speed motor-generator, especially a generator for a wind turbine, with minimized dimensions and a vertical (axial) construction. The object of the present invention is to overcome the problems arising from the prior art and to propose a motor-generator which has a low rolling resistance, which allows for its use as a generator in a wind turbine for low wind velocities, i.e. velocities of 1-8 m/s, while in the process granting the possibility to considerably reduce the dimensions of the motor-generator compared to the known solutions.

The term motor-generator is understood as an electric machine which can be employed both as an electric motor and as a generator.

In a preferred embodiment, an object of the present invention is to provide the possibility to use the motor-generator in both generator and motor operation modes, providing both a low-resistance and a low-speed generator and a motor with a similarly high efficiency as the generator.

The motor-generator according to the present invention comprises a rotor comprising an outer magnetic ring (1) and an inner magnetic ring (2), and a stator comprising a serpentine coil (4), arranged between the outer magnetic ring (1) and the inner magnetic ring (2). According to the present invention, the at least one magnetic ring constitutes a multipole monolithic magnet.

The multipole monolithic magnet means a magnet with multiple poles constituting a uniform, integral structure. Such a magnet may be produced, e.g., as a bonded or sintered magnet. The method known from WO2011126023A1 may be utilized to produce the bonded magnet. Preferably, an in-mold magnetized multipole monolithic "plastic-bonded"- or "resin-bonded"-type magnet produced in a low-temperature process is used.

It is possible to use various magnetic materials. For ecological reasons, it is preferable to use ferrite in place of neodymium, which constitutes a rare earth metal. A resin and/or polymers may be used as a binding material.

The advantage of the present invention is a simple, low-cost and compact construction with low rolling resistance, which allows for its use as a generator in a wind turbine for low wind velocities. The use of the monolithic magnets also translates into a greater durability of the product.

Replacing the classical coils with the serpentine coil allows to reduce the cost and accelerate the production of the stator.

Owing to the vertical structure, the motor-generator can have a reduced diameter, especially compared to the horizontal solutions, such as an axial flux generator.

A variant is possible in which one ring constitutes a multipole monolithic magnet and the other ring constitutes a steel ring, which allows to reduce the production cost.

Preferably, both magnetic rings (1, 2) constitute multipole monolithic magnets.

Preferably, the coil (4) constitutes a coreless coil. Using the coreless coil reduces the movement resistances, provides a smoother movement and a higher effectiveness at low rotational speeds, which is significant especially in the case of the generator operation.

The coreless serpentine coil may be made of a copper or aluminum tape or other electrical conductor.

In another preferred variant, the coil comprises at least one layer of an electrical conductor, such as aluminum or copper, and at least one layer of a material with good magnetic permeability, such as iron or nickel, which are arranged alternatingly. The material with good magnetic permeability means a material with a relative magnetic permeability amounting to 100 or higher.

The material with good magnetic permeability, present as an alternating layer with the material of which the coil is made, increases the power of the motor-generator and amplifies the magnetic field. The use of such a solution also allows to additionally reduce the dimensions of the rotor magnetic rings used by using weaker magnets. However, such a solution does not constitute the classical core on which the coil is being wound, as is the case for the core coils known from the prior art. The coil according to this preferred variant of the present invention may be referred to as a coil with an "inner core". Such a coil may still be referred to as an air coil because the coil is not wound on an outer element, such as steel bars or cores. The effect of reducing the movement resistances, providing a smooth movement and a high effectiveness at low rotational speeds is retained.

Owing to such a construction of the air coil with an inner core, it is possible to obtain a machine with low internal resistance which is characterized by a high efficiency in both the generator and motor operation modes, which allows for an equally effective functioning in both directions.

Preferably, the serpentine coil comprises from 10 to 30 layers of the electrical conductor and the same number of the layers of the material with good magnetic permeability which are arranged alternatingly. Particularly preferably, the serpentine coil comprises from 25 layers of the electrical conductor and the same number of the layers of the material with good magnetic permeability which are arranged alternatingly.

Preferably, the electrical conductor constitutes copper and the material with good magnetic permeability constitutes nickel or iron.

Preferably, the layer of the material with good magnetic permeability is electroplated onto the layer of the electrical conductor. E.g., the copper tape of which the serpentine coil is being made may be nickel-plated or covered with iron.

According to another preferred variant, the layer of the material with good magnetic permeability and the layer of the electrical conductor constitute alternatingly arranged tapes.

Preferably, the serpentine coil is made of a tape of an electric conductor, e.g., a copper tape, which is wound alternatingly with a tape of a magnetic material, e.g., a nickel tape or a tape of iron.

The motor-generator acc. to the present invention may operate in the motor or generator operation mode. The slow-speed 100-800 RPM construction of the motor-generator renders it utilizable as a generator in wind turbines for the production of electrical energy, especially from low wind velocities amounting to 1-8 m/s. It is particularly preferable that the present invention can be used as a generator in wind panels acc. to PCT/IB2024/051319.

The subject of the present invention in an embodiment is visualized in the drawings, in which Fig. 1 shows a motor-generator according to the present invention with a broken-out section revealing a serpentine coil, Fig. 2 shows the motor-generator according to present the invention in an exploded view, Fig. 3A shows a cross-section through the motor-generator according to an embodiment of the present invention with two magnetic rings constituting multipole monolithic magnets, Fig. 3B shows a cross-section through the motor-generator according to an embodiment of the present invention with the outer magnetic ring constituting a steel ring, Fig. 4A shows a cut-out of the serpentine coil constituting a coreless coil, Fig. 4B shows a cut-out of the serpentine coil made of alternatingly arranged tapes of a current-conducting material and a material with good magnetic permeability, Fig. 4C shows a cut-out of the serpentine coil made of the tape of the current-conducting material covered with the material with good magnetic permeability, Fig. 5 shows a longitudinal section of the motor-generator according to the present invention, Fig. 6 shows an embodiment of the serpentine coil, and Fig. 7 shows a comparative graph of the output electrical power and mechanical resistance for the generator according to the present invention.

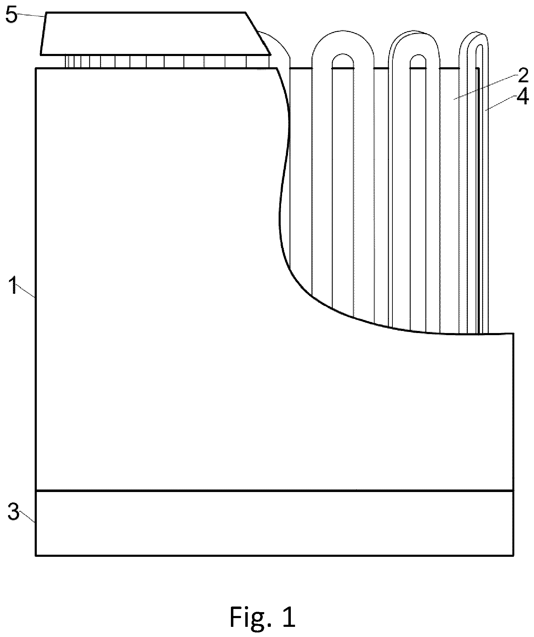

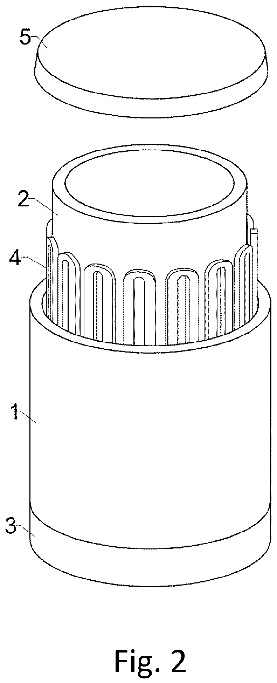

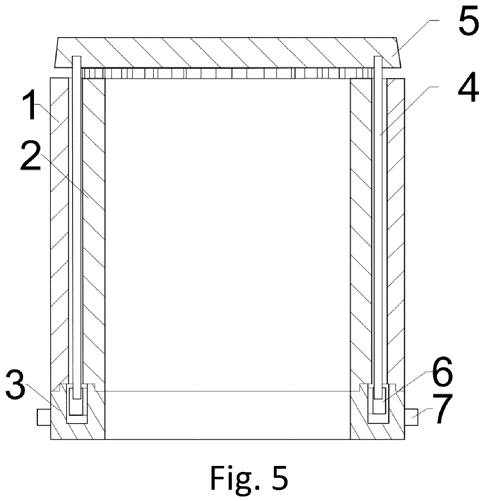

Elements of the construction of the motor-generator according to the embodiments of the present invention are visible in various views in Figs. 1, 2 and 5. A serpentine coil (4) is located between an outer magnetic ring (1) and an inner magnetic ring (2). The magnetic rings (1, 2) are embedded on a base (3) which constitutes an electrically and magnetically non-conductive element connecting them together. The base (3) may be equipped with a quick-locking element (7) constituting tabs allowing for a quick and secure embedding of the motor-generator in the construction of a device with which the present invention is to be used. The serpentine coil (4) constitutes a stator embedded stably on a non-rotating base (5) and a connecting ring (6). The base (5) and the connecting ring (6) constituting an auxiliary connecting element, made of an electrically and magnetically non-conductive material, which are arranged at the opposite ends of the stator, protect the serpentine coil (4) against undesirable bending and other mechanical damage.

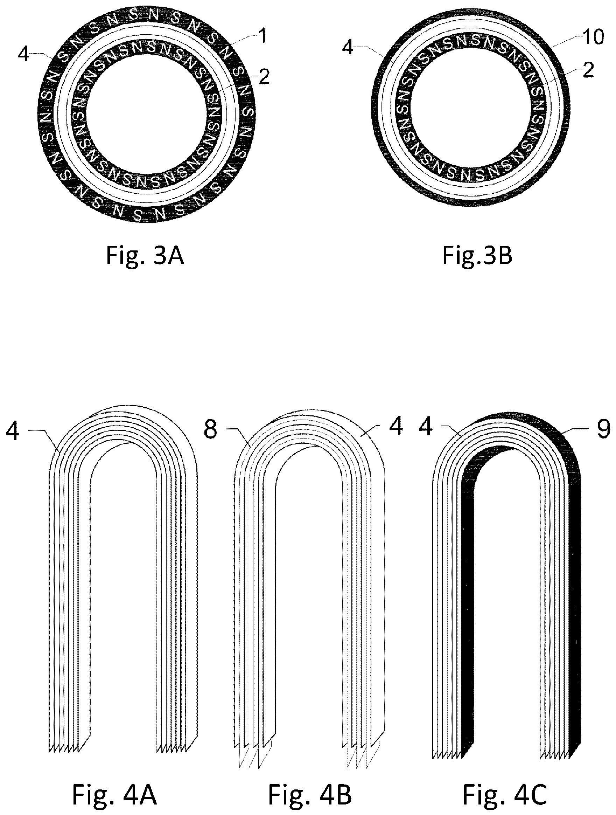

In the embodiment shown in Fig. 3A, both magnetic rings (1,2) constitute multipole monolithic magnets made of ferrite or other magnetic material connected to a binder and magnetized in a manner which induces the emergence of a corresponding magnetic circuit. A variant is also possible in which one of the magnetic rings (1,2) constitutes a multipole monolithic magnet (2) and the other magnetic ring constitutes a steel ring (10), as is visible in the embodiment in Fig. 3B. Such a variant allows to reduce the production cost.

In accordance with an embodiment of the present invention, the serpentine coil is made in a process comprising the following steps:
- winding at least one tape of a material of which the coil is being made into the shape of a circle with at least one turn,
- bending the wound material into the shape of a flat, horizontal serpentine coil,
- vertically bending the arms of this flat, horizontal serpentine coil, imparting to it the form of a vertical serpentine coil.

The step of bending the wound material into the shape of a flat, horizontal serpentine coil may occur, e.g., by employing movable pins by having the pins alternatingly extend inwardly and outwardly of the resulting circle or, analogously, by using rolls of a winding device.

In accordance with a preferred embodiment, the tape of the material of which the coil is being made constitutes a tape of an electrical conductor (4), e.g. of copper or aluminum, and the resulting coil constitutes the vertical serpentine coreless coil shown in Fig. 4A.

In accordance with a particularly preferred embodiment, the tape of the material of which the coil is being made constitutes the tape of the electrical conductor (4) and the tape of a material with good magnetic permeability (8) which are being wound alternatingly. E.g., the tape of the electrical conductor (4) is made of copper or aluminum, and the tape of the material with good magnetic permeability (8) is made of iron or nickel. At the time of the winding of both tapes into the initial shape of a circle, the layers of the electrical conductor and the material with good magnetic permeability arrange themselves alternatingly, and the resulting coil constitutes the vertical serpentine coil with an inner core according to the understanding of the present invention, revealed in Fig. 4B.

In accordance with another particularly preferred embodiment, the tape of the material of which the coil is being made constitutes the tape of the electrical conductor (4) unilaterally or bilaterally covered with a material with good magnetic permeability (9). E.g., the tape constitutes a nickel-plated or iron-covered copper or aluminum tape. At the time of the winding of the tape into the initial shape of a circle, the layers of the electrical conductor and the material with good magnetic permeability arrange themselves alternatingly, and the resulting coil constitutes the vertical serpentine coil with an inner core according to the understanding of the present invention, revealed in Fig. 4C.

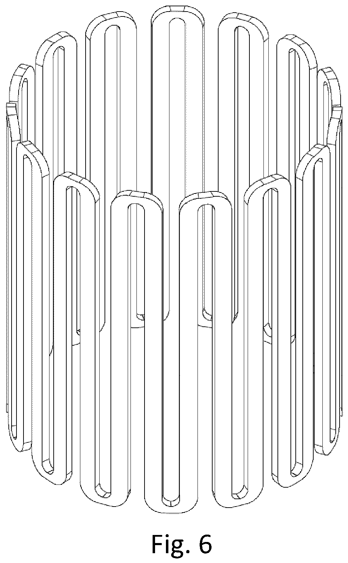

An embodiment of the outer shape of the serpentine coil according to the present invention is visible in Fig. 6.

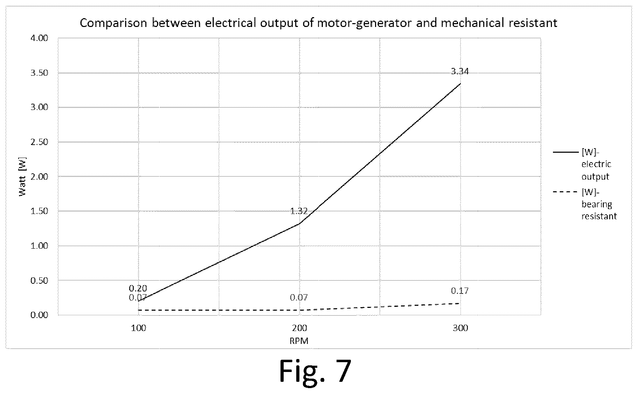

In the graph in Fig. 7, a comparison is shown between the electrical power generated by the motor-generator according to the present invention operating as a generator and the mechanical resistance resulting from the resistance of its bearings. A horizontal axis (x) displays the rotational speed (RPM), and a vertical axis (y) displays the power expressed in watts (W). A curve describing the resistance of the bearings maintains a low level throughout the range of the speeds, which evidences low mechanical losses generated by the bearings. On the other hand, a curve of the output power exhibits high values, which indicates an effective mechanical-to-electrical energy conversion by the generator. Such characteristics are typical for a low-speed generator with low internal resistance, which operates effectively even at low rotational speeds, while minimizing the losses resulting from the mechanical resistance.

## Claims

1. A motor-generator comprising:
a rotor comprising an outer magnetic ring (1) and an inner magnetic ring (2), and
a stator comprising a serpentine coil (4), arranged between the outer magnetic ring (1) and the inner magnetic ring (2),
wherein the at least one magnetic ring constitutes a multipole monolithic magnet.

2. The motor-generator acc. to claim 1, wherein both magnetic rings (1, 2) constitute multipole monolithic magnets.

3. The motor-generator acc. to any one of claims 1-3, wherein the serpentine coil (4) constitutes a coreless coil.

4. The motor-generator acc. to any one of claims 1-3, wherein the serpentine coil (4) comprises at least one layer of an electrical conductor and at least one layer of a material with good magnetic permeability which are arranged alternatingly.

5. The motor-generator acc. to claim 4, wherein the serpentine coil (4) comprises from 10 to 30, preferably 25, layers of the electrical conductor and the same number of the layers of the material with good magnetic permeability which are arranged alternatingly.

6. The motor-generator acc. to claim 4 or 5, wherein the electrical conductor constitutes copper and the material with good magnetic permeability constitutes nickel or iron.

7. The motor-generator acc. to any one of claims 4-6, wherein the layer of the material with good magnetic permeability is electroplated onto the layer of the electrical conductor.

8. The motor-generator acc. to any one of claims 4-6, wherein the layer of the material with good magnetic permeability and the layer of the electrical conductor constitute alternatingly arranged tapes.

9. The motor-generator according to any one of the preceding claims, constituting a generator for a wind turbine for the production of electrical energy from low wind velocities of 1-8 m/s.
